# EUROPÄISCHE PATENTANMELDUNG

(11) **EP 2 579 286 A1**
(43) Veröffentlichungstag der Anmeldung: **10.04.2013**
(21) Anmeldenummer: 12171576.7
(22) Anmeldetag: 12.06.2012
(51) Int. Cl.: H01H 27/00, H01H 9/18

(54) **Kartenschalter**

(30) Priorität: 23.09.2011 DE 102011053877
(71) Anmelder: Albrecht Jung GmbH & Co. KG, 58579 Schalksmühle (DE)
(72) Erfinder: Ullrich, Konrad, 58339 Breckerfeld (DE); Schmidt, Ingolf, 58579 Schalksmühle (DE); Brosowski, Mathias, 42897 Remscheid (DE); Hartmann, Torsten, 58509 Lüdenscheid (DE)

(57) **Zusammenfassung**

Es wird ein Kartenschalter mit einem den Führungsschlitz (1) für die Karte (2) aufweisenden Gehäuseoberteil (3) und einem die Schaltmechanik und zumindest ein Schaltelement, sowie weitere Funktionselemente aufnehmenden Gehäusesockelteil (4) vorgeschlagen, wobei die Schaltmechanik ein mit der unteren Hauptfläche der Karte zusammenwirkendes Betätigungsglied aufweist. Zu dem Zweck, einen besonders kompakt bauenden und einfach aufgebauten Kartenschalter zu schaffen, dessen zur Betätigung notwendigen Schaltkräfte besonders gering ausfallen, ist das Betätigungsglied (6) wippenartig am Gehäusesockelteil gelagert und beeinflusst das Betätigungsglied über seine der Karte abgewandte Fläche, zumindest ein elektrisches Schaltelement (7), welches mit einer im Gehäusesockelteil gehaltenen Leiterbahnanordnung (8) zusammenwirkt.

## Beschreibung

Die vorliegende Erfindung geht von einem gemäß Oberbegriff des Hauptanspruches konzipierten Kartenschalter aus.

Derartige Kartenschalter sind oftmals auf Basis herkömmlicher Taster der Gebäudesystemtechnik aufgebaut. Die Betätigung des zugehörigen Tasters wird bei solchen Kartenschaltern durch das Einführen der Karte in den Führungsschlitz bzw. das Herausziehen der Karte aus dem Führungsschlitz bewirkt. Beim Einführen der Karte kommt diese zunächst mit der unteren Hauptfläche an dem Betätigungsglied und mit der oberen Hauptfläche an der Innenseite des Gehäuseoberteils zur Anlage und schaltet dann beim weiteren Einführen z. B. den zugehörigen Taster ein. Mit dem Herausziehen der Karte aus dem Führungsschlitz wird der zugehörige Taster zum Beispiel automatisch wieder ausgeschaltet beziehungsweise zurückgesetzt. Oftmals finden solche Kartenschalter als Schlüsselkartenschalter in Hotels Anwendung, wobei mit der Schlüsselkarte oftmals auch gleichzeitig das Schloss der Zimmertür betätigt werden kann. Nach dem Betreten des Zimmers wird die Schlüsselkarte in den Schlüsselkartenschalter eingesteckt, wodurch alle angeschlossenen elektrischen Verbraucher eingeschaltet werden können. Die Schlüsselkarte verbleibt normalerweise im Kartenschalter bis das Zimmer wieder verlassen wird. Durch das Herausnehmen der Schlüsselkarte werden dann alle angeschlossenen elektrischen Verbraucher wieder ausgeschaltet. Oftmals sind solche Karten bzw. Schlüsselkarten mit empfindlichen Oberflächen, wie z. B. Aufdrucken und/oder empfindlichen Funktionselementen, wie z. B. Magnetstreifen versehen.

Durch die DE 10 2008 017 463 B3 ist ein dem Oberbegriff des Hauptanspruches entsprechender Kartenschalter bekannt geworden. Bei einem solchen Kartenschalter ist ein mit einem Führungsschlitz für die Karte vorgesehenes Gehäuseoberteil vorhanden. Außerdem ist ein solcher Kartenschalter mit einem die Schaltmechanik eines zugeordneten Tasters aufweisenden Gehäusesockelteil versehen, wobei die Schaltmechanik mit einem, mit der unteren Hauptfläche der Karte zusammenwirkendem Betätigungsglied versehen ist. Das Gehäuseoberteil weist an seiner dem Betätigungsglied zugeordneten Innenfläche des Gehäuseoberteils ein mit der oberen Hauptfläche der Karte zusammenwirkendes Führungsstück auf. Dabei ist davon auszugehen, dass gute Gleiteigenschaften aufweisende Materialen zur Anwendung kommen. Der Aufbau eines solchen Kartenschalters ist jedoch vergleichsweise komplex, und die zur Betätigung notwendigen Schaltkräfte sind vergleichsweise hoch, womit ein erhöhter Kartenverschleiß einhergeht, wenn nicht besondere Gegenmaßnahmen getroffen sind.

Der vorliegenden Erfindung liegt die Aufgabe zugrunde, einen besonders kompakt bauenden und einfach aufgebauten Kartenschalter zu schaffen, dessen zur Betätigung notwendigen Schaltkräfte besonders gering ausfallen, wodurch der Kartenverschleiß minimiert ist, ohne dass zusätzliche Maßnahmen getroffen werden müssen.

Diese Aufgabe wird durch die im Hauptanspruch angegebenen Merkmale gelöst.

Bei einem solchermaßen ausgebildeten Kartenschalter ist besonders vorteilhaft, wenn das Betätigungsglied und/oder das Gleitstück Aussparungen aufweisen, so dass bei sachgerechtem Gebrauch besonders empfindliche Bereiche, wie zum Beispiel ein Magnetstreifen, Aufdrucke usw. der Karte nicht am Betätigungsglied und/oder am Gleitstück zur Anlage kommen, so dass an diesen Bereichen der Karte Abrieb erst gar nicht entstehen kann.

Weiterhin ist die kompakte Modulbauweise des Kartenschalters besonders vorteilhaft, weil dadurch die Möglichkeit besteht, im Unterputzeinsatz auf einfache Art und Weise Zusatzfunktionen, wie z. B. die Einstellmöglichkeit einer gewünschten Nachlaufzeit, zu realisieren.

Zudem ist besonders vorteilhaft, eine indirekte Hinterleuchtung des Führungsschlitzes für die Karte vorzusehen, damit der Kartenschalter im Dunkeln für den Benutzer besser aufzufinden ist.

Weitere vorteilhafte Ausgestaltungen sind in den Unteransprüchen angegeben. Anhand eines in den Zeichnungen näher dargestellten Ausführungsbeispieles sie der erfindungsgemäße Gegenstand näher erläutert. Dabei zeigen:

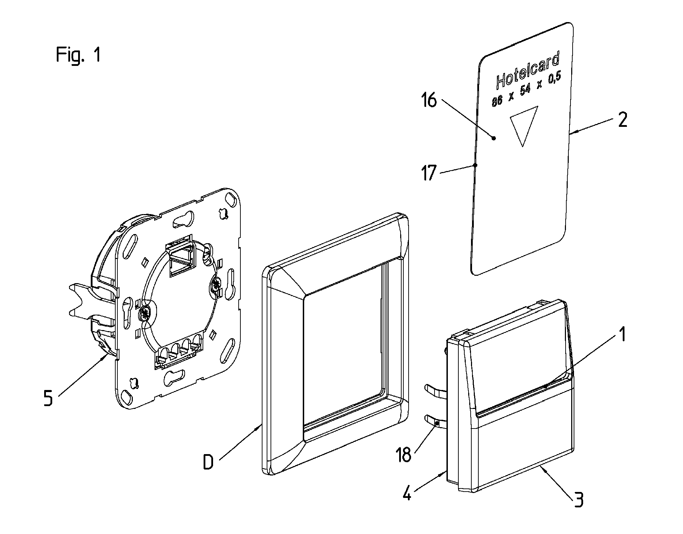

- Fig. 1:: prinziphaft den Grundaufbau eines solchen Kartenschalters, bestehend aus Unterputzeinsatz, Designrahmen und Funktionsaufsatz, sowie eine zugeordnete Karte räumlich in Explosionsdarstellung;

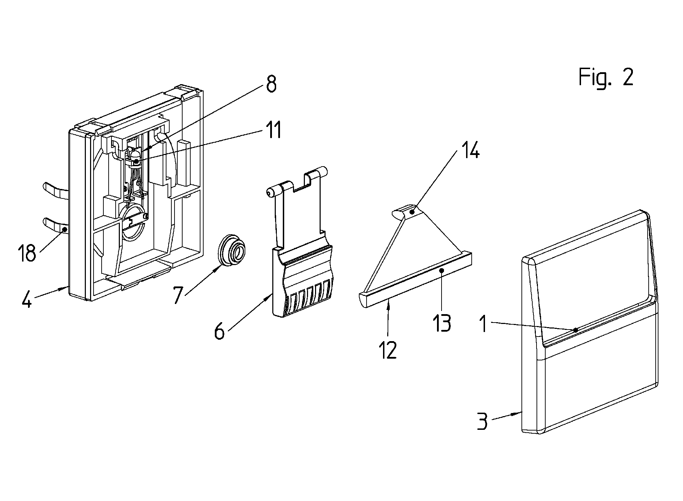

- Fig. 2:: prinziphaft einen gemäß Figur 1 ausgeführten Funktionsaufsatz mit den zugehörigen Funktionselemente räumlich in Explosionsdarstellung;

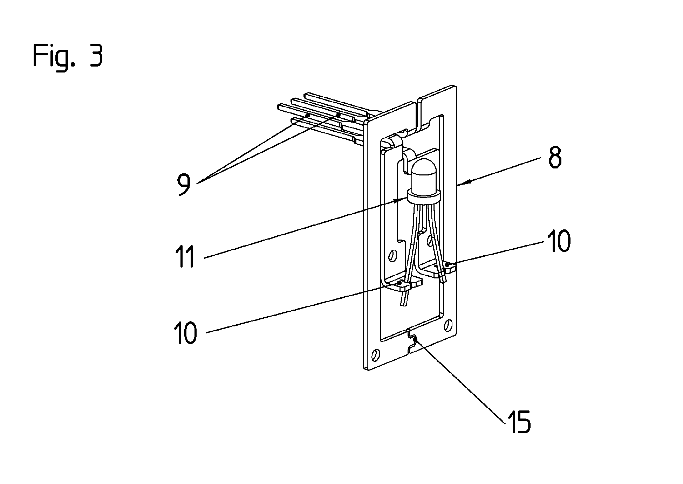

- Fig. 3:: prinziphaft die Leiterbahnanordnung vergrößert in räumlicher Darstellung.

Wie aus den Zeichnungen hervorgeht, besteht ein solcher Kartenschalter im Wesentlichen aus einem, mit einem Führungsschlitz 1 für die Karte 2 versehenen Gehäuseoberteil 3 und einem die zur Funktion notwendigen Bauteile aufnehmenden Gehäusesockelteil 4. Das Gehäuseoberteil 3 und das Gehäusesockelteil 4 bilden einen sogenannten "Funktionsaufsatz". Zur Verbindung mit einem Gebäudenetzwerk ist ein Unterputzeinsatz 5 vorgesehen. Gegebenenfalls kann das Gebäudenetzwerk als Bussystem ausgeführt sein. Unter Zwischenschaltung eines Designrahmens D, eines üblichen Abdeckprogramms werden Gehäuseoberteil 3 und Gehäusesockelteil 4, welche den Funktionsaufsatz bilden, an den Unterputzeinsatz 5 angekoppelt. Der Kartenschalter ist somit kompakt und einfach aufgebaut.

Wie des Weiteren aus den Figuren hervorgeht, ist ein Betätigungsglied 6 vorgesehen, welches wippenartig am Gehäusesockelteil 4 gelagert ist. Das Betätigungsglied 6 beeinflusst über seine der Karte 2 abgewandten Fläche ein elektrisches Schaltelement 7, welches mit einer am Gehäusesockelteil 4 gehaltenen Leiterbahnanordnung 8 zusammenwirkt. Die zur Betätigung des Kartenschalters notwendigen Schaltkräfte fallen deshalb besonders niedrig aus. Die Leiterbahnanordnung 8 besteht aus einem aus Metall hergestellten Stanzgitter, welches einerseits Steckerstifte 9 zur elektrischen Ankopplung an den Unterputzeinsatz 5 und andererseits Kontaktkrallen 10 zur Kontaktierung und Befestigung eines als bedrahtete LED ausgeführten Leuchtmittels 11 aufweist. Am Gehäusesockelteil 4 ist in Zuordnung des Leuchtmittels 11 ein Lichtleiter 12 gehalten, der mit seiner Lichtauskoppelfläche 13 gehäuseoberteilseitig dem Führungsschlitz 1 zugeordnet ist. Der Lichteinkoppelbereich 14 dieses Lichtleiters 12 ist direkt dem Leuchtmittel 11 zugeordnet, damit eine möglichst optimale Lichteinkopplung gewährleistet ist. Das Betätigungsglied 6 ist so angeordnet und ausgebildet, dass eine wirkungsvolle Abschottung des von dem Leuchtmittel 11 abgegebenen Licht erfolgt und Streulicht wirkungsvoll vermieden wird. Die Lichtauskoppelfläche 13 des Lichtleiters 12 ermöglicht durch seine Anordnung und Ausbildung eine homogene Hinterleuchtung des Führungsschlitzes 1.
Das elektrische Schaltelement 7 ist als sogenannter Domschaltkontakt ausgeführt, der beim Betätigen durch das Betätigungsglied 6 beziehungsweise durch das Einstecken der Karte 2 in den Führungsschlitz 1 eine in der Leiterbahnanordnung 8 vorhandene, schlitzartig ausgeführte Trennstelle 15 überbrückt. Das Betätigungsglied 6 besteht aus einem gute Gleiteigenschaften aufweisenden Kunststoffmaterial, und weist Aussparungen auf, so dass bei sachgerechtem Gebrauch besonders empfindliche Bereiche der Karte 2, wie zum Beispiel ein Magnetstreifen, Aufdrucke usw. nicht am Betätigungsglied 6 zur Anlage kommen, und somit an diesen Bereichen der Karte 2 Abrieb erst gar nicht entstehen kann. An der dem Betätigungsglied 6 zugeordneten Innenfläche des Gehäuseoberteils 3 ist ein mit der oberen Hauptfläche 16 der Karte 2 zusammenwirkendes - der Einfachheit halber nicht dargestelltes - Gleitstück vorhanden. Das Gleitstück ist aus einem gute Gleiteigenschaften aufweisenden Kunststoffmaterial hergestellt, und weist ebenfalls Aussparungen auf, so dass bei sachgerechtem Gebrauch besonders empfindliche Bereiche der Karte 2, wie zum Beispiel ein Magnetstreifen, Aufdrucke usw. nicht am Gleitstück zur Anlage kommen, und somit an diesen Bereichen der Karte 2 Abrieb erst gar nicht entstehen kann.

Wie bereits beschrieben, sind an der Leiterbahnanordnung 8 vier Steckerstifte 9 vorhanden, die für die elektrische Kopplung des Funktionsaufsatzes mit dem Unterputzeinsatz 5 vorgesehen sind. Um auf einfache Art und Weise auch eine sichere mechanische Kopplung beziehungsweise Befestigung des Funktionsaufsatzes zu gewährleisten, ist das Gehäusesockelteil 2 mit zwei Klemmfedern 18 versehen, die mit entsprechenden Ausnehmungen der Tragplatte des Unterputzeinsatzes 5 haltend zusammen wirken. Durch einen sogenannten "Putzausgleich" ist gewährleistet, dass der Funktionsaufsatz und der Designrahmen D höhenmäßig aufeinander abgestimmt zusammenwirken.

Die Betätigung des als Domschaltkontakt ausgebildeten Schaltelementes 7 wird bei einem solchen Kartenschalter durch das Einführen der Karte 2 in den Führungsschlitz 1 bzw. das Herausziehen der Karte 2 aus dem Führungsschlitz 1 bewirkt. Beim Einführen der Karte 2 kommt diese zunächst mit der unteren Hauptfläche 17 an dem Betätigungsglied 6 und mit der oberen Hauptfläche 16 an der Innenseite des Gehäuseoberteils 3 zur Anlage und betätigt dann beim weiteren Einführen das mit der Leiterbahnanordnung 8 zusammen wirkende Schaltelement 7, so dass die schlitzartige Trennstelle 15 überbrückt wird. Alle an den Kartenschalter angeschlossenen Verbraucher werden somit eingeschaltet beziehungsweise können somit eingeschaltet werden. Mit dem Herausziehen der Karte 2 aus dem Führungsschlitz 1 wird die Überbrückung der schlitzartigen Trennstelle 15 wieder aufgehoben, so dass alle an den Kartenschalter angeschlossenen Verbraucher automatisch ausgeschaltet werden.

Es ist somit ein besonders kompakt bauender, einfach aufgebauter Kartenschalter realisiert, dessen zur Betätigung notwendigen Schaltkräfte besonders gering ausfallen, wodurch der Kartenverschleiß minimiert ist, ohne dass zusätzliche Maßnahmen getroffen werden müssen.

## Patentansprüche

1. Kartenschalter mit einem den Führungsschlitz für die Karte aufweisenden Gehäuseoberteil und mit einem die Schaltmechanik und zumindest ein Schaltelement, sowie weitere Funktionselemente aufnehmenden Gehäusesockelteil, wobei die Schaltmechanik ein mit der unteren Hauptfläche der Karte zusammenwirkendes Betätigungsglied aufweist, **dadurch gekennzeichnet, dass** das Betätigungsglied (6) wippenartig am Gehäusesockelteil (4) gelagert ist und dass das Betätigungsglied (6) über seine der Karte (2) abgewandte Fläche, zumindest ein elektrisches Schaltelement (7) beeinflusst, welches mit einer im Gehäusesockelteil (4) gehaltenen Leiterbahnanordnung (8) zusammenwirkt.

2. Kartenschalter nach Anspruch 1, **dadurch gekennzeichnet, dass** die Leiterbahnanordnung (8) zumindest teilweise aus einer elektrischen Leiterplatte besteht.

3. Kartenschalter nach einem der Ansprüche 1 oder 2, **dadurch gekennzeichnet, dass** die Leiterbahnanordnung (8) zumindest teilweise aus einem aus Metall hergestellten Stanzgitter besteht.

4. Kartenschalter nach einem der Ansprüche 1 bis 3 **dadurch gekennzeichnet, dass** die Leiterbahnanordnung (8) zumindest mit einem Leuchtmittel (11) bestückt ist.

5. Kartenschalter nach Anspruch 4, **dadurch gekennzeichnet, dass** am Gehäusesockelteil (4) in Zuordnung zumindest eines Leuchtmittels (11) zumindest ein Lichtleiter (12) gehalten ist, welcher mit seiner Lichtauskoppelfläche (13) gehäuseoberteilseitig dem Führungsschlitz (1) zugeordnet ist.

6. Kartenschalter nach einem der Ansprüche 4 oder 5, **dadurch gekennzeichnet, dass** das Betätigungsglied (6) als Abschottungsmittel für das von dem Leuchtmittel (11) ausgestrahlten Licht ausgeführt ist.

7. Kartenschalter nach einem der Ansprüche 1 bis 6, **dadurch gekennzeichnet, dass** das Gehäusesockelteil (4) zur Kopplung mit einem Unterputzeinsatz (5) der Gebäudesystemtechnik vorgesehen ist.

8. Kartenschalter nach einem der Ansprüche 1 bis 7, **dadurch gekennzeichnet, dass** das Sockelteil (4) zum direkten Anschluss an das elektrische Netzwerk eines Gebäudes vorgesehen ist.

9. Kartenschalter nach einem der Ansprüche 1 bis 8, **dadurch gekennzeichnet, dass** zumindest ein elektrisches Schaltelement (7) als Domschaltkontakt ausgeführt ist.

10. Kartenschalter nach einem der Ansprüche 1 bis 9, **dadurch gekennzeichnet, dass** zumindest ein elektrisches Schaltelement (7) als Mikrotaster ausgeführt ist.

11. Kartenschalter nach einem der Ansprüche 1 bis 10, **dadurch gekennzeichnet, dass** das Gehäuseoberteil (3) und das Gehäusesockelteil (4) einen Funktionsaufsatz bilden.

12. Kartenschalter nach einem der Ansprüche 1 bis 11, **dadurch gekennzeichnet, dass** das Betätigungsglied (6) aus einem gute Gleiteigenschaften aufweisenden Kunststoffmaterial besteht.

13. Kartenschalter nach einem der Ansprüche 1 bis 12, **dadurch gekennzeichnet, dass** an der dem Betätigungsglied (6) zugeordneten Innenfläche des Gehäuseoberteils (3) ein mit der oberen Hauptfläche der Karte (2) zusammenwirkendes Gleitstück vorhanden ist.
